Europäisches Patentamt

(19) European Patent Office

Office européen des brevets

(11) Publication number: **0 064 307**
**B1**

## (12) EUROPEAN PATENT SPECIFICATION

(45) Date of publication of patent specification: **13.03.85**

(51) Int. Cl.⁴: **A 23 L 3/00**

(21) Application number: **82200463.6**

(22) Date of filing: **15.04.82**

(54) **Process for blanching mushrooms or other food products.**

(30) Priority: **23.04.81 NL 8102006**

(43) Date of publication of application:
**10.11.82 Bulletin 82/45**

(45) Publication of the grant of the patent:
**13.03.85 Bulletin 85/11**

(84) Designated Contracting States:
**AT BE CH DE FR GB IT LI LU NL SE**

(56) References cited:
BE-A- 530 503
CH-A- 179 432
DE-A-1 900 497
FR-A- 770 044
FR-A-2 003 560
FR-A-2 431 261
FR-A-2 442 018
GB-A- 757 729
US-A-2 049 639
US-A-2 403 871
US-A-2 696 775
US-A-2 780 551
US-A-3 235 103
US-A-3 396 040

(73) Proprietor: **JONKER FRIS B.V.**
**Nieuwe Maasdijk 1 P.O. Box 5**
**NL-5256 ZG Heusden (NL)**

(72) Inventor: **van de Wiel, Pieter Maria**
**Wolput 86**
**NL-5251 CH Vlijmen (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to a process for blanching mushrooms or other food products.

The blanching of mushrooms is generally known. Cleaned mushrooms are submerged in water having a temperature of generally between 70°C and 100°C for e.g. 5—10 minutes, whereby enzymes in the mushrooms are made inactive, albumine is coagulated in the mushrooms, oxygen is removed from the mushrooms and the mushrooms lose weight and flavour.

To reduce this loss of weight and flavour during blanching and also during the subsequent sterilisation the mushrooms may also be subjected for some time to an evacuation process, whereby the air in the mushrooms is replaced by water. The mushrooms treated in this way may then be blanched and canned (vide the publication of E. Steinbuch, Conserva, volume 15 (1966—1967), pages 97—103).

It is further known from the U.S. Patent Specification No. 2,403,871 to blanch edibles, such as fruits, vegetables, meat and fish, by maintaining the edibles in constant motion while being subjected to the direct action of steam or hot water. Preferably steam is introduced under pressure in the range of from 6.9 to 138 kPa, the temperature and pressure are gradually increased at the beginning of the blanching and gradually decreased towards the end of the blanching and the temperature is in the range of from 96.5 to 104°C. The disadvantage of this known process is that a complicated apparatus for the constant motion of the edibles is necessary.

US—A—3,396,040 discloses a process for preserving peeled and sectionalized citrus fruit in a glass container having such citrus fruit therein comprising the steps of partially filling said container with a syrup, placing said glass container and its contents in a vacuum chamber to establish a partial vacuum in the unfilled portion of said container, closing the top thereof with a suitable closure, while maintaining the partial vacuum in said container, placing the closed container under a pressure of 34—105 kPa and while maintaining the pressure, cooking the same at a temperature of 107—121°C for a period of time between 2 to 12 minutes and cooling said container and its contents to room temperature.

From DE—A—1,900,497 it is known to blanch sauerkraut, red cabbage, peas, beans and suchlike by pumping the material to be treated mixed with the treating liquid through a heated conduit, heating the material to the treating temperature and maintaining it at said temperature. The blanching is carried out under ambient pressure.

It has now been found that it is advantageous to carry out blanching of mushrooms and other food products, such as vegetables and fruits, at temperatures above 100°C and under such an elevated pressure that the medium remains liquid, because the mushrooms must be present in a liquid medium during blanching.

The process of the invention is characterized in that a liquid medium with mushrooms or other food products present therein is heated indirectly at a temperature above 100°C under such an elevated pressure that the medium remains liquid.

By blanching the mushrooms according to the process of the invention the loss of weight is considerably reduced, so that per kilogram of fresh mushrooms a higher yield is obtained than was possible thus far, their flavour being better preserved. Moreover the apparatus to be used for blanched mushrooms or other products according to the invention need not be complicated.

The temperature used in the process of the invention is preferably between 110°C and 180°C.

The pressure, which has such a value that the blanching medium remains liquid, is generally not lower than 200 kPa gauge and not higher than 1000 kPa gauge.

In most cases the blanching medium consists completely or mainly of water. The water may contain dissolved substances, if desired, which may or may not influence the material to be blanched.

The duration of blanching is in general 1—10 minutes.

It is preferred that the heat transfer to the medium, in which the material to be blanched is present, is as rapid as possible. It appears that the maximum efficiency can be achieved in this way. The higher the temperatures the more rapidly the heat transfer takes place. Thus, in the treatment of great mushrooms in most cases higher temperatures will be used than in the treatment of small mushrooms.

Before the mushrooms are blanched by means of the process of the invention, the air may be removed from the mushrooms and may be replaced by liquid.

The process of the invention may be carried out batchwise or continuously.

The blanching of mushrooms or other food products according to the invention can be carried out e.g. in an autoclave. The liquid blanching medium and the material to be blanched, such as mushrooms, are introduced into this autoclave, whereafter the autoclave is brought under pressure and the contents thereof are heated indirectly.

A preferred apparatus for carrying out the process of the invention is provided with inlet means for material to be blanched, outlet means for blanched material, a system of vessels, in which the material to be blanched can be heated indirectly in a liquid medium, means for heating the material to be blanched, means for increasing the pressure and means for cooling the blanched material.

The preferred apparatus is e.g. an autoclave comprising a system of tubes. The mushrooms and the blanching medium, e.g. water, are introduced into these tubes, which may have an arbitrary cross section and may be e.g. square, rectangular or round, whereafter the tubes are heated from outside under the desired pressure.

After blanching the contents of the tubes are cooled, e.g. with cold water, the pressure is reduced to atmospheric pressure and mushrooms are removed from the autoclave. Of course, the pressure should not be reduced before the blanching medium is cooled sufficiently, because otherwise the mushrooms would be cooked, which should be prevented. The blanched mushrooms can be canned immediately.

As means for heating indirectly the material to be blanched preferably steam is used, although heating can also be carried out with other gases or liquids or with electric heating coils. When using steam as a heating agent for the blanching medium the temperature thereof is dependent on the desired blanching temperature. The temperature of the steam is in general 120°C to 250°C and preferably 150°C to 200°C.

For cooling after blanching in most cases cold water is used.

Therefore, in the apparatus of the invention the means for heating the material to be blanched are e.g. steam conduits or electric heating coils and the means for cooling the blanched materials are preferably cold water conduits.

The process of the invention can be carried out continuously, e.g. by filling vessels with the blanching medium and the material to be blanched, closing the vessels, transporting them first through a heating medium for a sufficient period of time to obtain the desired temperature and subsequently through a cooling medium, withdrawing the blanched material and the blanching medium from the vessels and refilling the vessels again.

The process of the invention cannot only be used for blanching mushrooms, but also for blanching other food products, such as certain types of vegetables and fruits.

## Claims

1. Process for blanching mushrooms or other food products, characterized in that a liquid medium with mushrooms or other food products present therein is heated indirectly at a temperature above 100°C under such an elevated pressure that the medium remains liquid.

2. Process according to claim 1, characterized in that the liquid medium is brought at a temperature between 110°C and 180°C.

3. Process according to claim 1 or 2, characterized in that a pressure of at least 200 kPa gauge and at most 1000 kPa gauge is used.

4. Process according to any one of the preceding claims, characterized in that as a liquid blanching medium a medium is used consisting completely or mainly of water.

5. Process according to any one of the preceding claims, characterized in that the blanching is carried out for 1—10 minutes.

## Revendications

1. Procédé pour blanchir des champignons ou d'autres produits alimentaires, caractérisé en ce qu'un milieu liquide contenant des champignons ou d'autres produits alimentaires est chauffé indirectement à une température supérieure à 100 °C sous une pression suffisamment élevée pour que le milieu reste liquide.

2. Procédé suivant la revendication 1, caractérisé en ce que le milieu liquide est amené à une température comprise entre 100 °C et 180 °C.

3. Procédé suivant la revendication 1 ou 2, caractérisé en ce qu'une pression d'au moins 200 kPa et d'au plus 100 kPa est utilisée.

4. Procédé suivant l'une quelconque des revendications précédentes, caractérisé en ce que le milieu de blanchissement liquide utilisé consiste entièrement ou principalement d'eau.

5. Procédé suivant l'une quelconque des revendications précédentes, caractérisé en ce que le blanchissement est réalisé pendant 1—10 minutes.

## Patentansprüche

1. Verfahren zum Blanchieren von Pilzen und anderen Nahrungsmitteln, dadurch gekennzeichnet, daß ein flüssiges Medium mit darin vorhandenen Pilzen oder anderen Lebensmitteln indirekt auf eine Temperatur oberhalb 100°C unter einem solchen erhöhten Druck erhitzt wird, daß das Medium flüssig bleibt.

2. Verfahren nach Anspruch 1, dadurch gekennzeichnet, daß das flüssige Medium auf eine Temperatur zwischen 110°C und 180°C gebracht wird.

3. Verfahren nach Anspruch 1 oder 2, dadurch gekennzeichnet, daß ein Überdruck von mindestens 200 kPa und höchstens 1.000 kPa angewendet wird.

4. Verfahren nach einem der Ansprüche 1 bis 3, dadurch gekennzeichnet, daß als flüssiges Blanchiermedium ein ganz oder hauptsächlich aus Wasser bestehendes Medium verwendet wird.

5. Verfahren nach einem der Ansprüche 1 bis 4, dadurch gekennzeichnet, daß das Blanchieren während 1 bis 10 Minuten durchgeführt wird.